# EUROPEAN PATENT SPECIFICATION

(11) **EP 1 467 131 B1**
(45) Date of publication and mention of the grant of the patent: **26.04.2006**
(21) Application number: 03445045.2
(22) Date of filing: 07.04.2003
(51) Int. Cl.: F16K 1/30, F17C 13/04

(54) **Valve arrangement for disposable container**
Ventilanordnung für Wegwerfbehälter
Dispositif de soupape pour récipient jetable

(43) Date of publication of application: 13.10.2004
(73) Proprietor: L'Air Liquide S. A. à Directoire et Conseil de Surveillance pour l'Etude et l'Exploitation des Procédés Georges Claude, 75321 Paris Cedex 07 (FR); Air Liquide Gas AB, 212 24 Malmö (SE)
(72) Inventor: Tolstav, Enar, 212 24 Malmö (SE)
(74) Representative: Conan, Philippe Claude

(56) References cited:
- DE-A- 3 611 588
- DE-U- 8 528 739
- GB-A- 2 176 586
- US-A- 4 543 980
- US-A- 5 467 798
- US-A1- 2003 029 508

## Description

### Field of the invention

The present invention relates to a valve arrangement for disposable containers for storing pressurised content, in particular gas.

### Background

Disposable containers for pressurised gas have been used for a number of years. Such disposable containers are often provided as miniature bottles with a volume of about one litre, which makes them particularly suitable for fieldwork. Such disposable containers may also be used within research and development for limited tests and educational purposes. Furthermore, disposable lightweight containers have been advantageously used for storing calibration gases for e.g. gas warning systems, environmental measurements, exhaust fume measurements, medical analysis and gas chromatography.

Disposable containers for pressurised gas are generally manufactured in aluminium or in an aluminium alloy. However, being adapted to one time use, it is important to make sure that the disposable container is not refilled once it has been opened. For this reason, the disposable containers offered on the market are provided with a valve arrangement useable for filling gas into the container and for discharging gas from the container, and a non-return valve which is devised to assume a non-reversible blocking state for preventing further filling of gas into the container.

A Swedish patent application published under No. SE 468779, discloses such a valve arrangement for disposable gas containers. This valve arrangement comprises a valve housing projecting into the container, having a filling and tapping valve arranged at its upper parts, which comprises an axially moveable valve body which is spring loaded towards the closed position. Furthermore, arranged in the lower part of the valve housing is a non-return valve which, in the closed position, prevent filling gas into the container. The non-return valve is released by the valve body of the filling and tapping valve after gas has been filled into the container. A problem with this prior art valve is that it is fairly complex, with two separate valve devices, in total comprising thirteen parts. This leads to high costs for both manufacture and assembly.

### Summary of the invention

Consequently, it is an object of the present invention to provide a valve arrangement for disposable containers devised to store pressurised content, which valve arrangement is devised to prevent refilling of such a disposable container once tapping of its content has been initiated. In accordance with the invention, this object is fulfilled by a valve arrangement for disposable containers, comprising a valve housing having a through bore extending between a first side of said valve housing devised to face a container interior and a second side of said valve housing devised to face a container exterior, and valve closing means for closing said through bore, a closing member of said closing means being devised to seal said through bore responsive to a positive gas pressure difference between said first and second sides, the closing member being operable from said second said for equalising said pressure difference and releasing said closing member from said valve housing through said first side retaining means being provided for preventing the closing member from unintentionally falling out of said valve housing through said first side, said retaining means projecting radially from an elongated portion of the closing member and being devised to engage with a co-operating portion of said valve housing, the elongated portion extending along a centre axis from a seal-receiving portion adjacent to an end of closing member, retaining means being disposed adjacent to the opposite end of closing member along the centre axis. Such a value arrangement, in accordance to the preambule of claim 1 is disclosed in document GB-A-2 176 586. According to this document, the retaining means should be produced by thermal or mecanical deformation of one end of a valve rod after the valve rod has been engaged in the valve body. This arrangement is quite complicated and expensive. The valve arrangement according to the present invention is characterized in that retaining means include barb-shaped protrusions projecting radially away from the centre axis at and angle toward the seal-receiving portion.

Consequently, the same closing member is used for sealing the container once filled, and for preventing refilling of said container.

In an embodiment of the invention, said closing member has an elongated portion, projecting inside said through bore in a direction towards said second side. This elongated portion makes it possible to operate the sealing engagement between the closing member and a valve seat of the valve housing from the second side.

Preferably, said closing means is displaceable, from a closed state, towards said first side to an open state allowing fluid communication and pressure equalisation through said through bore. In other words, by pressing the closing member towards the first side, the pressure on the opposite side of the valve housing is equalised and thus no retaining pressure difference remains.

In one embodiment, said retaining means are disposed on a part of said elongated portion, which part projects a distance outside the surface portion of the second side of said valve housing when the closing member is closed, such that said retaining means are accessible to be disarmed. In one embodiment said retaining means are disarmed by cutting off said part of the elongated portion.

In a preferred embodiment, said closing member is a single piece of plastic material. In an embodiment having the retaining means devised on a part of the elongated portion projecting outside the second said of the valve housing, the retaining means is preferably disarmed by cutting off the top portion of the plastic closing member. This way, once pressure is equalised, the closing member may fall freely under gravity into the disposable container, whereby no filling valve remains. In an embodiment with a projecting rim in the through bore, the plastic closing member is preferably squeezed passed said rim by using the resiliency or softness of the plastic material. Once the retaining means have past the rim, the closing member will also fall into the container under the influence of gravity.

In a preferred embodiment, the closing means comprises a widened portion of the closing member, a shoulder portion of the valve housing, and a seal arranged there between. Preferably, said widened portion is a head of said closing member, devised to press said seal against a surface portion of said second side.

In a preferred embodiment, said seal is an o-ring arranged circumferencially about said closing member, adjacent to said widened portion.

### Brief description of the drawings

The invention will be described in detail below with reference to the accompanying drawings, in which:
Fig. 1 schematically illustrates a side view of a valve housing of a first embodiment in accordance with the present invention;
Fig. 2 illustrates the valve housing of Fig. 1 as seen from above;
Fig. 3 illustrates a seal and a closing member for use with valve housing according to Fig. 1 in accordance with the first embodiment of the invention;
Fig. 4 illustrates the assembled closing member and seal of Fig. 3;
Fig. 5 illustrates the assembled closing member and seal of Fig. 4 as seen from above;
Fig. 6 illustrates an assembled valve arrangement in accordance with the first embodiment of the present invention when mounted to a disposable container, in an open state;
Fig. 7 illustrates the embodiment of Fig. 6 in a closed state;
Fig. 8 schematically illustrates how the closing member is disarmed in said first embodiment of the present invention;
Fig. 9 illustrates engagements of a tapping nipple to the valve arrangement and release of the closing member, in accordance with the first embodiment of the present invention;
Figs 10 and 11 illustrate a second embodiment which is not part of the present invention, corresponding to Figs 1 and 2;
Figs 12-14 illustrate a second embodiment which is not part of the invention of the closing member and seal for use with the valve housing of Figs 10-11;
Figs 15 and 16 illustrate an open and closed state, respectively, of said second embodiment of the valve arrangement; and
Fig. 17 illustrates engagements of a tapping nipple to said second embodiment of the valve arrangement, and release of the closing member from the valve housing.

### Detailed description of preferred embodiments

The first embodiment of the present invention will be described with reference to drawings 1-9.

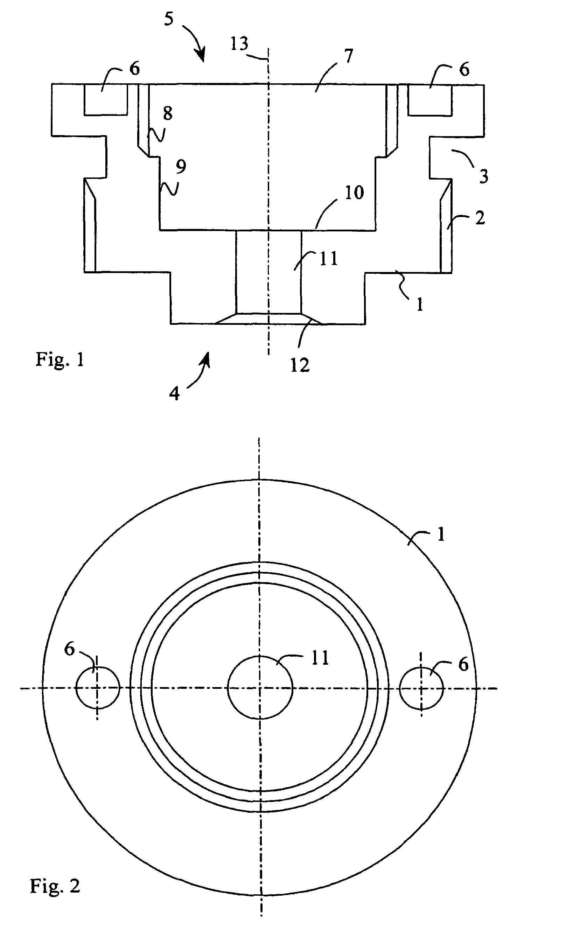

Fig. 1 illustrates a valve housing 1 as seen from a side view. The same valve housing 1 is illustrated in a top view in Fig. 2. Valve housing 1 is preferably made from a solid piece of metal, machined to the desired shape. Valve housing 1 is devised to be mounted to an opening of a disposable container, and is therefore provided with a container opening interface including container engagement means 2 and seal supporting means 3. The container engagement means preferably includes an at least partly threaded portion 2 on an external part of valve housing 1 extending about a centre axis 13. When attached to a container, threaded portion 2 engages with a co-operating thread on a neck portion of said container. Furthermore, a seal, preferably an o-ring, is placed in seal supporting means 3, which seal engages a sealing portion of said neck portion of the container. The container engagement interface 2,3 defines a border between a first side 4 devised to face the interior of an attached container, and a second side 5 devised to face away from said container interior. A through bore 11 extends through the valve housing body 1 between said first side 4 and second side 5, for allowing gas communication through valve housing 1. In the disclosed embodiment, a recessed portion 7 is formed in the second side of valve housing 1, with an inner threaded portion 8 for engaging with means for filling and tapping of container content. Means for mounting the valve housing 1 to a container includes two diametrically opposing holes 6, devised to co-operate with corresponding protrusions on a mounting tool.

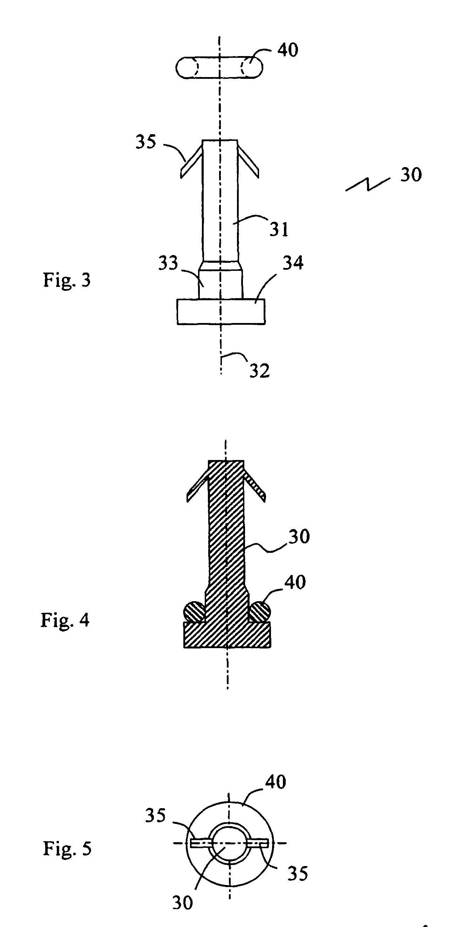

Fig. 3 illustrates a preferred embodiment of a closing member 30 and a seal 40 devised as an o-ring, which are devised to be used with a valve housing 1 according to Figs 1 and 2. Preferably, closing member 30 is formed in one piece of a relatively soft material, such as nylon. Closing member 30 includes an elongated portion 31, extending along a centre axis 32 from a seal-receiving portion 33 adjacent to a lower end of closing member 30. Distal to said seal-receiving portion 33, a widened seal supporting head portion 34 is formed. Adjacent to the opposite end of closing member 30, retaining means 35 are disposed. In the disclosed embodiment, said retaining means include barb-shaped protrusions 35, projecting radially away from a centre axis 32. By shaping the protrusions 35 of the retaining means at an angle towards head portion 34, assembly of closing member 30 with valve housing 1 is simplified.

Fig. 4 illustrates a cross-sectional view of the assembled closing member 30 and o-ring seal 40, in accordance with a preferred embodiment of the invention. As the skilled person realises, instead of mounting seal 40 to closing member 30, seal 40 may be disposed on valve housing 1. However, by mounting o-ring seal 40 about seal receiving portion 33 a secure assembly is obtained, whereas mounting of o-ring seal 40 to valve housing 1 would require machining of a recessed portion in valve housing 1 which would have to be carefully designed to retain the o-ring seal 40.

Fig. 5 illustrates the assembled closing member 30 and o-ring seal 40 as seen from a top view. From Fig. 5 it is also evident that retaining means 35 only includes discrete projections and do not extend all the way around the circumference of elongated portion 30. This way, gas may still communicate and flow along the envelope surface of elongated portion 30 without being blocked by retaining means 35. The disclosed embodiment comprises two projections 35, whereas alternative embodiments of course may comprise an arbitrary number of projections.

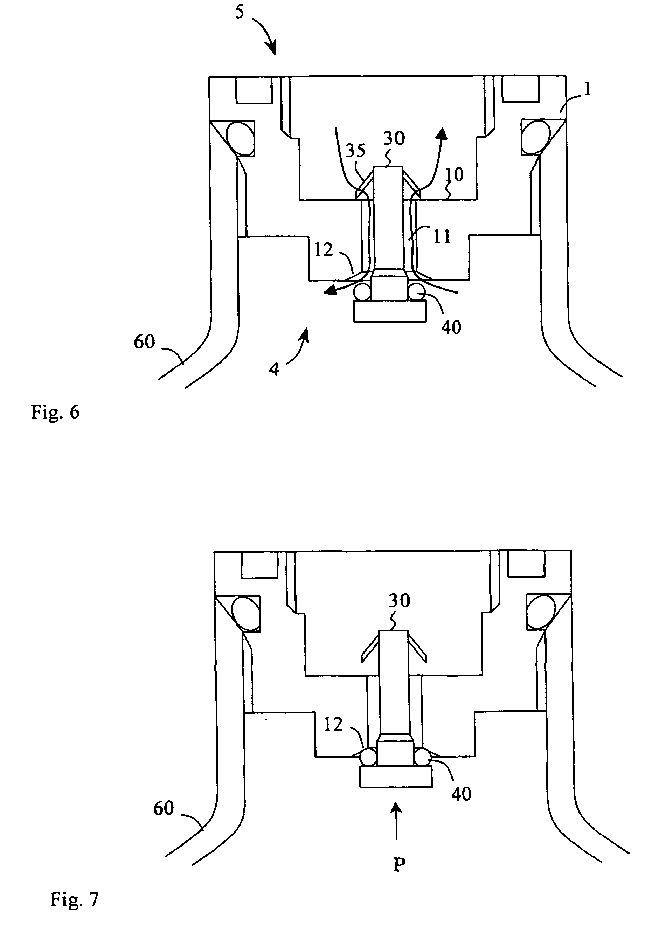

Fig. 6 illustrates the assembled valve arrangement in accordance with the first embodiment of the invention, including valve housing 1, closing member 30, and seal 40. Closing member 30 has been assembled with valve housing 1 by simply pushing elongated portion 31 into through bore 11, forcing projections 35 to flex and bend against the inner wall of through bore 11. Closing member 30 is made of a resilient material, whereby projections 35 will flex out to the position illustrated in Fig. 6 once they have been pushed out of through bore 11. In this position, projections 35 co-operate with a surface portion 10 on the second side 5 of valve housing 1, for retaining closing member 30 in assembly with valve housing 1. It should be noted that the resiliency of projections 35 is not essential for the valve function of this first embodiment as such, the benefit thereof merely being easy assembly with valve housing 1. Projections 35 could alternatively be realised by means of the rigid member secured to elongated portion 35 after closing member 30 has been introduced in through bore 11.

Once assembled, closing member 30 is retained in assembly with valve housing 1 by means of widened portion 34 and seal 40 on the first side 4, and retaining means 35 on the second side 5. However, there are no springs holding closing member 30 in a particular relation to valve housing 1. On the contrary, closing member 30 preferably hangs loose in through bore 11 when the gas pressure on the opposing sides 4 and 5 of valve housing 1 is equal. The arrows illustrated in Fig. 6 indicate that gas may communicate through the valve arrangements in through bore 11 along the envelope surface of elongated portion 31. Needless to say, the dimensions of elongated portions 31 and through bore 11 are selected such that a sufficient gap is obtained there between for gas communication. When gas is to be filled into container 60, partly shown in Fig. 6, a filling nipple is attached to valve housing 1, preferably by engagement with threads 8 and by means of sealing engagement with walls 9 of recess 7. Said filling nipple may be devised to mechanically engage with the top portion of closing member 30 for securing that o-ring seal 40 is not in contact with valve seat 12. However, as long as a gas pressure is provided by the filling nipple, the gas pressure will be the same on the opposite sides of through bore 11, whereby closing member 30 will continue to hang loose.

When container 60 has been filled to a desired pressure P the gas supplied from the filling nipple is terminated. Once the pressure is decreased on the second side 5 of through bore 11 the pressure of the container interior will force closing member 30 upwards as illustrated in Fig. 7. Seal 40 is thereby engaged with valve seat 12, whereupon the valve is closed. Basically, the container 60 is now ready to be used. However, in accordance with the first embodiment of the present invention, it has to be secured that container 60 cannot be refilled once opened.

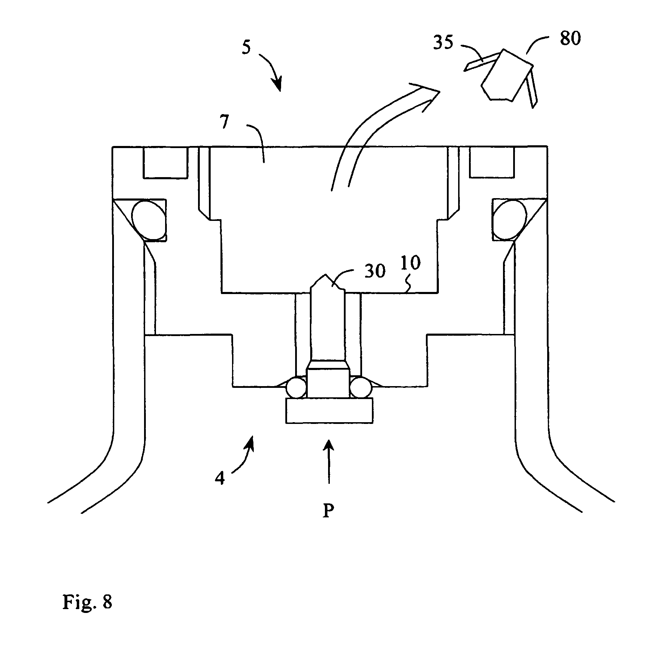

According to the first embodiment of the invention, this is obtained by removing retaining means 35 from closing member 30. This may be done by simply removing projections 35 from elongated portion 31. Alternatively, and as illustrated in Fig. 8, a top part 80 of elongated portion 31, which part carries retaining means 35, is simply removed from the remainder of closing member 30. By providing closing member 30 in a soft material, such as nylon, this step is easily achieved by simply cutting off the top part 80, which projects above surface portion 10 of the recessed portion 7 of valve housing 1. In a preferred embodiment, the removing of retaining means 35, with or without top portion 80, is achieved immediately after filling of container 60 is terminated. Retaining means 35 are thereby disarmed, and the only means maintaining assembly of closing member 30 and valve housing 1 is the positive pressure difference between the interior of container 60, facing first side 4, and the exterior of the container 60 facing the second side 5. Once this pressure difference is eliminated, closing member 30 will be completely separated from valve housing 1, and, when oriented as illustrated in the drawings, the force of gravity on closing member 30 will simply release it and separate it from valve housing 1.

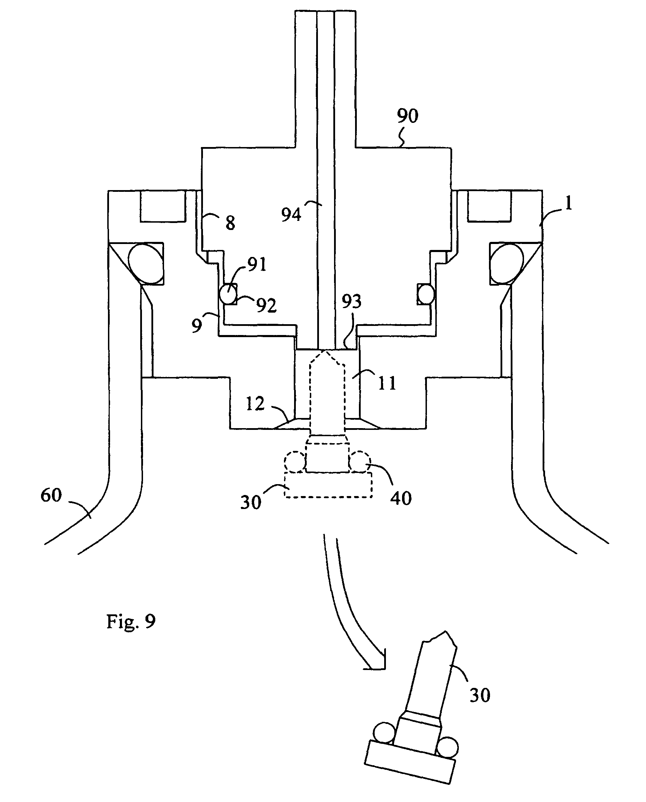

Fig. 9 illustrates tapping of container 60 in accordance with the first embodiment of the present invention. A tapping nipple 90 is engaged with valve housing 1, preferably by means of a threaded engagement at 8. Tapping nipple 90 carries a seal, preferably an o-ring 91 in an annular recessed portion 92, which engages in a side wall 9 of valve housing 1. When tapping nipple 90 is forced downward into valve housing 1, a lower portion 93 of tapping nipple 90 engages with closing member 30. Further downwards movement of tapping nipple 90 will thereby force closing member 30 and seal 40 out of engagement with valve housing 1, opening connection between through bore 11 and the container interior. Once seal 40 and valve seat 12 are disengaged, closing member 30 is released and separated from valve housing 1, whereby it will fall down into the interior of container 60. Once closing member 30 has been separated from valve housing 1, no valve function remains, and consequently container 60 cannot be refilled. A particular advantage of the first embodiment of the present invention, having disconnectable retaining means 35, is that closing member 30 is released immediately when tapping is initiated. The tapping nipple does not have to be displaced a predetermined distance for securing that the valve cannot be reclosed. On the contrary, the very same moment which the container is opened closing member 30 is released.

In a variant of this embodiment (not shown), a spring is disposed between closing member 30 and valve housing 1, biased to force closing member 30 away from valve housing 1. The spring should be biased such that it is capable of lifting and separating closing member 30 from valve housing 1 even when the container 60 is oriented upside down and the pressure is equalised between sides 4 and 5.

A second embodiment which is not part of the present invention will now be described with reference to drawings 10-17.

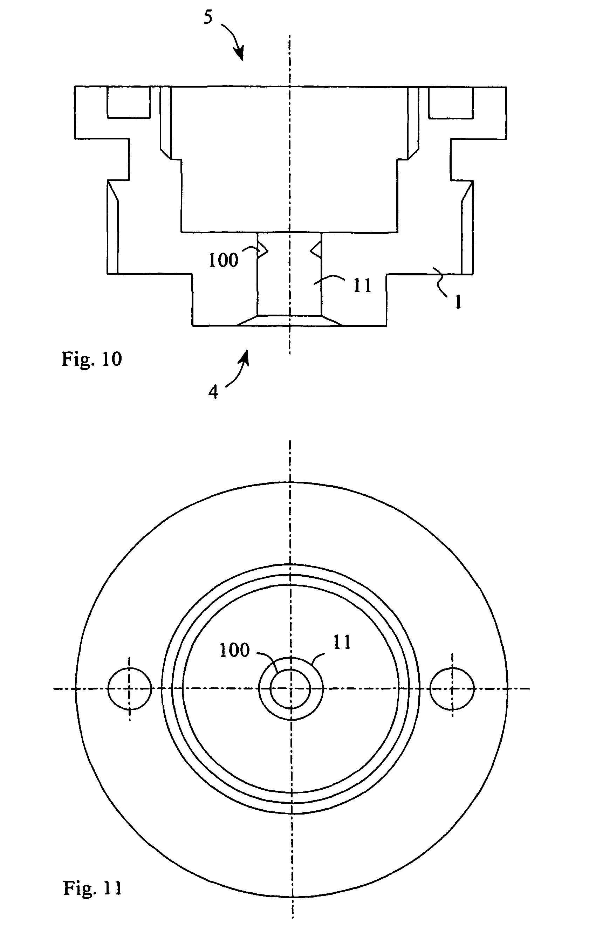

Figs 10 and 11 illustrates a valve housing which is similar to that of Figs 1 and 2, for which reason the same reference numerals are used for corresponding features. In addition to the features of the first embodiment disclosed in Fig. 1, the second embodiment includes a rim 100 projecting inwardly from the wall of through bore 11. This rim constitutes a neck portion, which co-operates with a closing member to be inserted in through bore 11, which will be described below.

Fig. 11 shows a top view of the valve housing according to Fig. 10, in which it is clearly illustrated that rim 100 constitutes a neck portion in through bore 11.

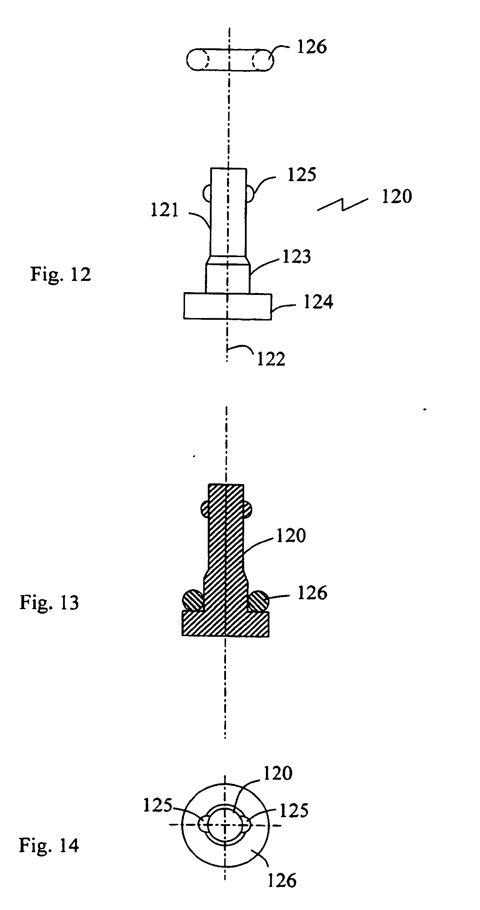

Fig. 12 illustrates a closing member 120 comprising a elongated portion 121, extending along a centre axis 122. A seal receiving portion 123 is disposed adjacent to an end of closing member 120 and outwardly of said seal receiving portion 123 the closing member 120 is devised with a widened seal supporting head portion 124. Elongated portion 121 includes retaining means 125, projecting radially away from centre axis 122. In the illustrated embodiment, retaining means 125 are realised by means of rounded protrusions adjacent to an end portion of closing member 120, opposite head portion 124. An o-ring seal 126 is devised to be fitted about seal receiving portion 123, adjacent to widened seal supporting portion 124. As for the previous first embodiment, the closing member 120 is preferably made in one piece from a soft and resilient material, such as nylon.

Fig. 13 illustrates the assembled closing member 120 and seal 126 in cross-section.

Fig. 14 illustrates the assembled closing member 120 and o-ring seal 126 in a top view. From this drawing it is evident that retaining means 125 comprises a discrete number of rounded protrusions, in the illustrated example two, which do not cover the entire circumference of elongated portion 121. Also for this embodiment, any number of protrusions 125 may be used.

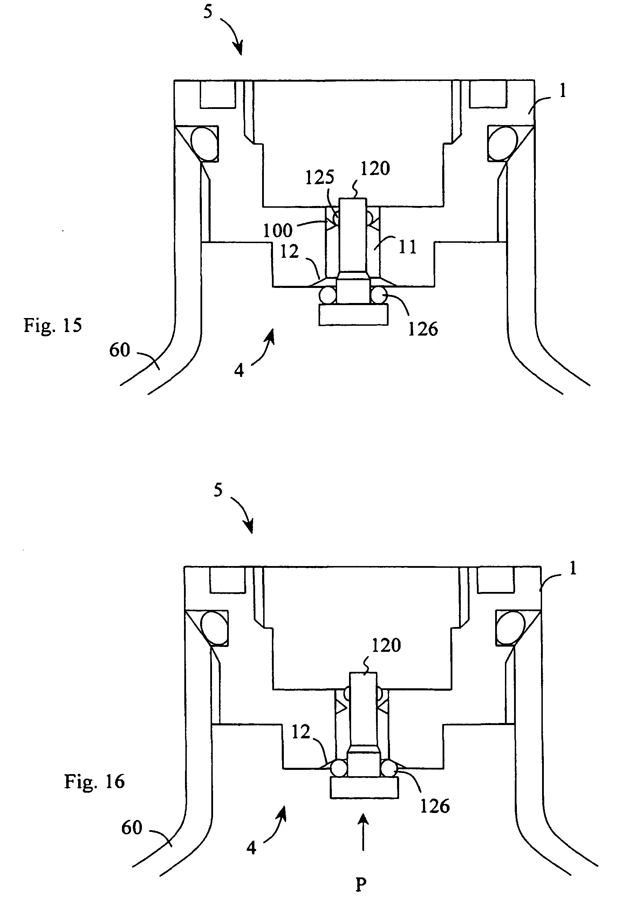

Fig. 15 illustrates the assembled valve arrangements according to the second embodiment, with valve housing 1 attached to and engaged with a neck portion of container 60. Closing member 120 is introduced in through bore 11, by squeezing said rounded protrusions passed rim 100, taking advantage of the resiliency of the material of closing member 120. Obviously, the outer diameter between the outermost portions of protrusions 125 is slightly larger than the inner diameter defined by rim 100. This way, closing member 120 will be retained by cooperation between protrusions 125 and rim 100 once fully introduced into through bore 11. As for the first embodiment of the present invention, closing member 120 is otherwise loose and not affected by any auxiliary spring member or the like for holding locking member 120 in a certain state. When protrusions 125 are engaged with rim 100 from the second side 5 of valve housing 1, as illustrated in Fig. 15, a free gas passage is provided between seal 126 and valve seat 12. This way, filling of container 60 may be carried out in the same way as for the first embodiment described previously.

Furthermore, once container 60 has been filled to an over pressure compared to the second side 5 of valve housing 1, closing member 120 will be forced by the positive pressure difference between the first side 4 and the second side 5 of valve housing 1 to engage seal 126 with valve seat 12 and thereby close the valve.

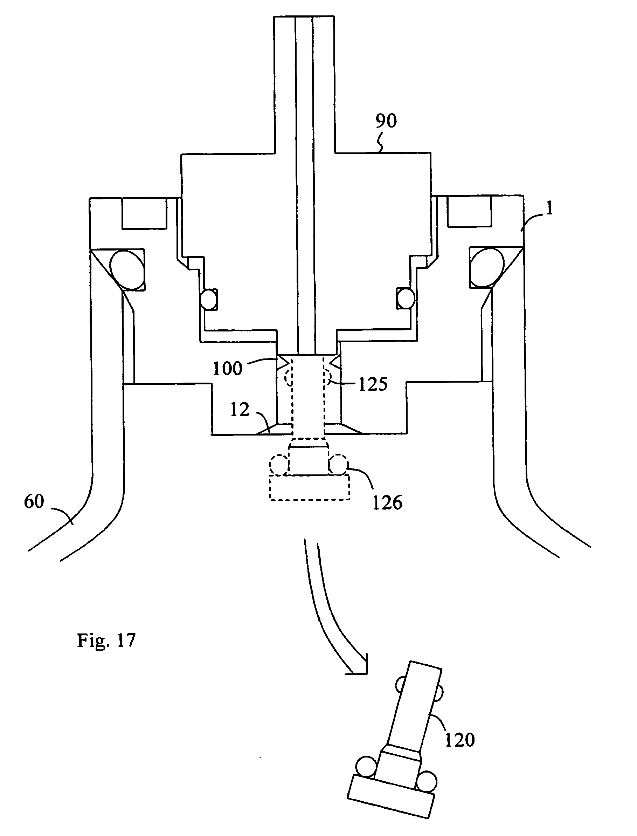

Fig. 17 illustrates tapping of container 60, and corresponds to Fig. 9 of the first embodiment of the present invention. In this second embodiment, retaining means 125 are not disarmed by means of removal. Instead, closing member 120 has to be forced downwards such that protrusions 125 pass rim 100, this preferably being achieved by means of a tapping nipple 90 which engages mechanically with a top portion of closing member 120. As tapping nipple 90 is screwed onto valve housing 1 and displaced downwards, closing member 120 will thereby be correspondingly displaced after mechanically engagement with tapping nipple 90, and subsequently released. As for the first embodiment, gas communication is obtained as soon as seal 126 is disengaged from valve seat 12. However, in this second embodiment, closing member 120 has to be actively displaced to the point where protrusions 125 have past rim 100, for releasing closing member 120 from valve housing 1. Once released and separated from valve housing 1, closing member 120 will fall under the force of gravity down into container 60, whereafter no valve function remains for the container 60, thus preventing it from being refilled.

The skilled person realises that several modifications may be made of the overline concept of the invention, namely to release and separate a valve closing member from a valve housing when tapping of the pressurised container content is initiated. For one thing, the closing member does not have to have a head portion supporting the seal against an outer valve seat of the valve housing. Instead, the seal may be supported by a shoulder portion on the closing member and devised to engage with a corresponding shoulder portion at an arbitrary part of the through bore of the valve housing. The valve arrangement according to the present invention is very simple and comprises only three parts: a valve housing, a closing member, and a seal member for sealing the engagement between the closing member and the valve housing. The loose fit between the closing member and the valve housing means that the tolerance requirements for producing the separate parts is fairly low. The present invention provides a valve arrangement which it is advantageous both in terms of security towards refilling, and produceability. Such a valve arrangement is particularly appropriate to small lightweight cylinder containers, such as one litre/25 * 10⁵ Pa non-returnable aluminium cylinders.

The scope of the invention is defined by the appended claims.

## Claims

1. Valve arrangement for disposable containers, comprising a valve housing (1) having a through bore (11) extending between a first side (4) of said valve housing devised to face a container interior and a second side (5) of said valve housing devised to face away from said container interior, and valve closing means (30,12) for closing said through bore, a closing member (30) of said closing means being devised to seal said through bore responsive to a positive gas pressure difference between said first and second sides, the closing member being operable from said second side for equalising said pressure difference and thereby releasing and separating said closing member from said valve housing through said first side, retaining means (35) being provided for preventing the closing member from unintentionally falling out of said valve housing through said first side, said retaining means projecting radially from an elongated portion of said closing member and being devised to engage with a cooperating portion (10) of said valve housing, said elongated portion (31) extending along a centre axis (32) from a seal receiving portion (33) adjacent to an end of said closing member said retaining means (35) being disposed adjacent to the opposite end of said closing member (30) along said centre axis, **characterised in that** said retaining means include barb-shaped protrusions (35) projecting radially away from the centre axis at an angle towards the seal-receiving portion (33).

2. The valve arrangement as recited in claim 1, **characterised in that** said elongated portion (31), projects inside said through bore in a direction towards said second side.

3. The valve arrangement as recited in claim 1, **characterised in that** said closing member is displaceable from a closed state towards said first side to an open state allowing fluid communication and pressure equalisation through said through bore.

4. The valve arrangement as recited in claim 1, 2 or 3, **characterised in that** said retaining means are disposed on a part of said elongated portion, which part projects a distance outside a surface portion of the second side of said valve housing when the closing member is closed, such that said retaining means are accessible to be disarmed.

5. The valve arrangement as recited in claim 4, **characterised in that** said retaining means are disarmed by cutting off said part (80) of the elongated portion.

6. The valve arrangement as recited in any of the preceding claims, **characterised in that** said closing member is a single piece of plastic material.

7. The valve arrangement as recited in any of the preceding claims, **characterised in that** said closing means comprises a widened portion (34) of said closing member, a shoulder portion (12) of said valve housing, and a seal (40) arranged there between.

8. The valve arrangement as recited in claim 7, **characterised in that** said widened portion is a head of said closing member, devised to press said seal against a surface portion (12) of said second side.

9. The valve arrangement as recited in claim 8, **characterised in that** said seal is an o-ring arranged on said closing member, adjacent to said widened portion, said shoulder portion being a valve seat.

10. The valve arrangement as recited in any of the preceding claims, **characterised in that** said barb-shaped protrusions are made of a resilient material.

## Patentansprüche

1. Ventilanordnung für Wegwerfbehälter, die Folgendes aufweist: ein Ventilgehäuse (1) mit einer Durchgangsbohrung (11), die sich zwischen einer ersten Seite (4) des Ventilgehäuses, die zu einem Behälterinneren weist, und einer zweiten Seite (5) des Ventilgehäuses, die von dem Behälterinneren fort weist, erstreckt, und ein Ventilverschlussmittel (30, 12) zum Verschließen der Durchgangsbohrung, wobei ein Verschlusselement (30) des Verschlussmittels dafür konfiguriert ist, die Durchgangsbohrung in Reaktion auf einen positiven Gasdruckunterschied zwischen der ersten und der zweiten Seite abzudichten, wobei das Verschlusselement von der zweiten Seite her so bedient werden kann, dass der Druckunterschied ausgeglichen wird, wodurch das Verschlusselement durch die erste Seite hindurch von dem Ventilgehäuse gelöst und getrennt wird, wobei Haltemittel (35) vorhanden sind, um zu verhindern, dass das Verschlusselement versehentlich durch die erste Seite hindurch aus dem Ventilgehäuse herausfällt, wobei das Haltemittel radial von einem länglichen Abschnitt des Verschlusselements hervorsteht und so konfiguriert ist, einen zusammenwirkenden Abschnitt (10) des Ventilgehäuses in Eingriff zu nehmen, wobei sich der längliche Abschnitt (31) entlang einer Mittelachse (32) von einem Dichtungsaufnahmeabschnitt (33) neben einem Ende des Verschlusselements erstreckt, wobei das Halteelement (35) neben dem gegenüberliegenden Ende des Verschlusselements (30) entlang der Mittelachse angeordnet ist, **dadurch gekennzeichnet, dass** das Haltemittel widerhakenförmige Vorsprünge (35) enthält, die radial von der Mittelachse fortweisend in einem Winkel, der zu dem Dichtungsaufnahmeabschnitt (33) hin geneigt ist, hervorstehen.

2. Ventilanordnung nach Anspruch 1, **dadurch gekennzeichnet, dass** der längliche Abschnitt (31) im Inneren der Durchgangsbohrung in einer Richtung zur zweiten Seite hin hervorsteht.

3. Ventilanordnung nach Anspruch 1, **dadurch gekennzeichnet, dass** das Verschlusselement aus einem geschlossenen Zustand in Richtung der ersten Seite in einen offenen Zustand verschoben werden kann, wodurch eine strömungsmäßige Verbindung und ein Druckausgleich durch die Durchgangsbohrung hindurch möglich werden.

4. Ventilanordnung nach Anspruch 1, 2 oder 3, **dadurch gekennzeichnet, dass** das Haltemittel an einem Teil des länglichen Abschnitts angeordnet ist, wobei dieser Teil um eine Distanz außerhalb eines Oberflächenabschnitts der zweiten Seite des Ventilgehäuses hervorsteht, wenn das Verschlusselement geschlossen ist, dergestalt, dass das Haltemittel zugänglich ist, um entschärft zu werden.

5. Ventilanordnung nach Anspruch 4, **dadurch gekennzeichnet, dass** das Haltemittel durch Abtrennen des Teils (80) des länglichen Abschnitts entschärft wird.

6. Ventilanordnung nach einem der vorangehenden Ansprüche, **dadurch gekennzeichnet, dass** es sich bei dem Verschlusselement um ein einzelnes Stück Kunststoffmaterial handelt.

7. Ventilanordnung nach einem der vorangehenden Ansprüche, **dadurch gekennzeichnet, dass** das Verschlussmittel einen aufgeweiteten Abschnitt (34) des Verschlusselements, einen Schulterabschnitt (12) des Ventilgehäuses sowie eine dazwischen angeordnete Dichtung (40) aufweist.

8. Ventilanordnung nach Anspruch 7, **dadurch gekennzeichnet, dass** der aufgeweitete Abschnitt ein Kopf des Verschlusselements ist, der dafür konfiguriert ist, die Dichtung gegen den Oberflächenabschnitt (12) der zweiten Seite zu drücken.

9. Ventilanordnung nach Anspruch 8, **dadurch gekennzeichnet, dass** es sich bei der Dichtung um einen O-Ring handelt, der auf dem Verschlusselement neben dem aufgeweiteten Abschnitt angeordnet ist, wobei es sich bei dem Schulterabschnitt um einen Ventilsitz handelt.

10. Ventilanordnung nach einem der vorangehenden Ansprüche, **dadurch gekennzeichnet, dass** die widerhakenförmigen Vorsprünge aus einem elastischen Material bestehen.

## Revendications

1. Dispositif de soupape pour récipients jetables, comprenant un corps de soupape (1) comportant un alésage traversant (11) s'étendant entre un premier côté (4) dudit corps de soupape destiné à faire face à l'intérieur d'un récipient, et un deuxième côté (5) dudit corps de soupape destiné à faire face à l'opposé dudit intérieur de récipient, et des moyens de fermeture de soupape (30, 12) servant à fermer ledit alésage traversant, un élément de fermeture (30) desdits moyens de fermeture étant destiné à obturer ledit alésage traversant en réaction à une différence de pression de gaz positive entre lesdits premier et deuxième côtés, l'élément de fermeture pouvant être actionné à partir dudit deuxième côté pour égaliser ladite différence de pression et relâcher et séparer ainsi ledit élément de fermeture vis-à-vis dudit corps de soupape à travers ledit premier côté, des moyens de retenue (35) étant prévus pour empêcher l'élément de fermeture de tomber involontairement hors dudit corps de soupape à travers ledit premier côté, lesdits moyens de retenue se projetant radialement à partir d'une portion allongée dudit élément de fermeture et étant destinés à s'engager avec une partie coopérante (10) dudit corps de soupape, ladite portion allongée (31) s'étendant le long d'un axe central (32) à partir d'une partie de réception de joint (33) à proximité d'une extrémité dudit élément de fermeture, lesdits moyens de retenue (35) étant disposés à proximité de l'extrémité opposée dudit élément de fermeture (30) le long dudit axe central, **caractérisé en ce que** lesdits moyens de retenue comportent des saillies en forme de barbes (35) se projetant radialement à partir de l'axe central sous un certain angle en direction de la partie de réception de joint (33).

2. Dispositif de soupape selon la revendication 1, **caractérisé en ce que** ladite portion allongée (31) se projette à l'intérieur dudit alésage traversant dans une direction allant vers ledit deuxième côté.

3. Dispositif de soupape selon la revendication 1, **caractérisé en ce que** ledit élément de fermeture peut être déplacé d'un état fermé vers ledit premier côté à un état ouvert permettant une communication fluidique et une égalisation de pression à travers ledit alésage traversant.

4. Dispositif de soupape selon l'une quelconque des revendications 1, 2 ou 3, **caractérisé en ce que** lesdits moyens de retenue sont disposés sur une partie de ladite portion allongée, ladite partie se projetant sur une certaine distance à l'extérieur d'une portion de surface du deuxième côté dudit corps de soupape lorsque l'élément de fermeture est fermé, de telle sorte que lesdits moyens de retenue soient accessibles pour être neutralisés.

5. Dispositif de soupape selon la revendication 4, **caractérisé en ce que** lesdits moyens de retenue sont neutralisés en coupant ladite partie (80) de la portion allongée.

6. Dispositif de soupape selon l'une quelconque des revendications précédentes, **caractérisé en ce que** ledit élément de fermeture est une seule pièce de matière plastique.

7. Dispositif de soupape selon l'une quelconque des revendications précédentes, **caractérisé en ce que** lesdits moyens de fermeture comprennent une partie élargie (34) dudit élément de fermeture, une portion d'épaulement (12) du corps de soupape et un joint (40) arrangé entre celles-ci.

8. Dispositif de soupape selon la revendication 7, **caractérisé en ce que** ladite partie élargie est une tête dudit élément de fermeture, destinée à presser ledit joint contre une portion de surface (12) dudit deuxième côté.

9. Dispositif de soupape selon la revendication 8, **caractérisé en ce que** ledit joint est un joint torique arrangé sur ledit élément de fermeture, à proximité de ladite partie élargie, ladite portion d'épaulement étant un siège de soupape.

10. Dispositif de soupape selon l'une quelconque des revendications précédentes, **caractérisé en ce que** lesdites saillies en forme de barbes sont constituées d'une matière élastique.
